(19) Europäisches Patentamt
European Patent Office
Office européen des brevets

(11) **EP 4 330 948 B1**

(12) **FASCICULE DE BREVET EUROPEEN**

(45) Date de publication et mention
de la délivrance du brevet:
**30.07.2025 Bulletin 2025/31**

(21) Numéro de dépôt: **22726784.6**

(22) Date de dépôt: **28.04.2022**

(51) Classification Internationale des Brevets (IPC):
***G09B 21/02*** *(2006.01)*

(52) Classification Coopérative des Brevets (CPC):
**G09B 21/025**

(86) Numéro de dépôt international:
**PCT/FR2022/050816**

(87) Numéro de publication internationale:
**WO 2022/229566 (03.11.2022 Gazette 2022/44)**

(54) **DISPOSITIF HAPTIQUE DE LECTURE METTANT EN OEUVRE LA METHODE BRAILLE-PERKINS**

HAPTISCHE LESEVORRICHTUNG, DIE DAS BRAILLE-PERKINS-VERFAHREN IMPLEMENTIERT

HAPTIC READING DEVICE IMPLEMENTING THE BRAILLE-PERKINS METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.04.2021 FR 2104426**

(43) Date de publication de la demande:
**06.03.2024 Bulletin 2024/10**

(73) Titulaire: **Commissariat à l'Energie Atomique et
aux Energies
Alternatives
75015 Paris (FR)**

(72) Inventeurs:
• **PANTERA, Lucie
91191 Gif-Sur-Yvette Cedex (FR)**
• **HUDIN, Charles
91191 Gif-Sur-Yvette Cedex (FR)**
• **PANËELS, Sabrina
91191 Gif-Sur-Yvette Cedex (FR)**

(74) Mandataire: **Brevalex
Tour Trinity
1 B Place de la Défense
92400 Courbevoie (FR)**

(56) Documents cités:
EP-A1- 3 705 983        WO-A1-2019/083751
US-A1- 2016 034 180     US-A1- 2021 072 861

• SHIRI AZENKOT ET AL: "Input finger detection
for nonvisual touch screen text entry in
Perkinput", 20120528; 1077952576 - 1077952576,
28 May 2012 (2012-05-28), pages 121 - 129,
XP058009882, ISBN: 978-1-4503-1420-6

**Description**

## DOMAINE TECHNIQUE ET ÉTAT DE LA TECHNIQUE ANTÉRIEURE

La présente invention se rapporte à un dispositif haptique de lecture mettant en œuvre la méthode Braille-Perkins, plus particulièrement à un dispositif haptique de lecture mettant en œuvre la méthode Braille-Perkins utilisant la méthode de filtrage inverse.

Les personnes malvoyantes peuvent lire un texte qui a été traduit dans l'alphabet Braille, dans lequel chaque caractère est représenté dans une matrice de six points sur deux colonnes, chaque caractère étant formé par un à six points en relief. L'accès à des contenus numériques en utilisant l'alphabet Braille requiert l'utilisation d'une plage Braille qui est un objet lourd, encombrant, fragile et coûteux. Cette plage ne peut pas être transportée comme peut l'être un téléphone portable de type smartphone.

Il existe une machine d'écriture, dite machine Perkins, qui permet d'écrire un texte en Braille. Il s'agit d'une machine à écrire avec six touches, chaque touche correspondant à un point d'un caractère Braille. L'utilisateur pose l'index, le majeur et l'annulaire de chaque main sur une touche. L'index de la main gauche correspond au point 1, le majeur de la main gauche correspond au point 2, l'annulaire de la main gauche correspond au point 3, l'index de la main droite correspond au point 4, le majeur de la main droite correspond au point 5, l'annulaire de la main droite correspond au point 6.

Cette méthode d'écriture sera désignée la méthode Braille-Perkins. Cette méthode est appliquée à la lecture, qui consiste à solliciter l'index, le majeur et l'annulaire de chaque main.

Il existe des dispositifs de type surface tactile qui envoient des stimulations à l'index, au majeur et à l'annulaire de chaque main, cependant se pose un problème de localisation des vibrations. En effet l'activation d'un actionneur en vue de la stimulation d'un des doigts peut mettre en vibration les zones voisines de ce doigt et également solliciter un ou plusieurs des autres doigts et donc transmettre de fausses informations au lecteur.

Le document Nicolau, H. M. « Holibraille: Multipoint vibrotactile feedback on mobile devices'. Proceedings of the 12th Web for All Conference, 1-4 May, 18-20, 2015 décrit un dispositif comportant un boîtier rectangulaire auquel sont fixés six actionneurs via des ressorts. Trois actionneurs sont disposés en colonne le long d'un premier bord du boîtier et trois actionneurs sont disposés en colonne le long d'un deuxième bord du boîtier parallèle au premier bord. Chaque actionneur représente un point de la matrice Braille. L'utilisateur dispose ses doigts directement en contact avec les actionneurs. La mise en œuvre de ressorts pour relier les actionneurs au boîtier permet de localiser les vibrations et évite une transmission des vibrations d'un actionneur à un autre doigt que celui en contact direct avec l'actionneur mis en vibration. La lecture de caractère est alors possible. Ce dispositif est encombrant et fragile ; les actionneurs faisant saillie du boîtier.

Le document Rantala, J. R. « Methods for presenting braille characters on a mobile device with a touchscreen and tactile feedback", IEEE Transactions on Haptics, 28-39 ; Jan. 15, 2009 décrit un dispositif mobile permettant la lecture de caractères Braille par retour tactile. Le dispositif comporte un écran sous lequel est fixé un actionneur piézoélectrique qui met en vibration tout l'écran. L'utilisateur détecte la vibration directement par son doigt ou un stylet. Le retour haptique ne peut être localisé sur l'écran. La lecture d'un caractère ne peut se faire que point par point. Le document EP 3 705 983 A1 (UNIVERSITÄT HEIDELBERG [DE]) 9 septembre 2020 (2020-09-09) décrit un dispositif permettant la lecture des caractères Braille par retour tactile. Le dispositif ne limite pas les risques de mauvaises interprétations des signaux par l'utilisateur.

## EXPOSÉ DE L'INVENTION

C'est par conséquent un but de la présente invention d'offrir un dispositif haptique mettant en œuvre la méthode Braille-Perkins d'utilisation simple et confortable et limitant les risques de mauvaises interprétations des signaux par l'utilisateur.

Le but énoncé ci-dessus est atteint par un dispositif haptique comportant une plaque munie d'une surface avec laquelle les doigts de l'utilisateur vont venir en contact, des actionneurs fixés à la plaque, lesdits actionneurs étant aptes à générer une vibration au niveau de la surface en des zones distinctes, des moyens de commande desdits actionneurs, comprenant des moyens de calcul des signaux de commande mettant en œuvre une opération de filtrage inverse, et envoyant des signaux de commande aux actionneurs. Les moyens de commande sont configurés pour mettre en vibration entre une et six zones de la surface pour permettre au moins l'affichage haptique de caractères en Braille par la méthode Braille-Perkins.

L'utilisation du filtrage inverse pour calculer les signaux de commande des actionneurs permet de compenser les effets de propagation des ondes en dehors de la ou des zones sur lesquelles les doigts sont placés, ce qui évite que des doigts soient stimulés à tort, ce qui fausserait la lecture. Notamment les doigts destinés à être stimulés peuvent être proches, par exemple l'index et le majeur ou le majeur et l'annulaire d'une main. Grâce à l'invention, les vibrations émises sous le majeur ne seront pas ressenties par l'index ou l'annulaire.

Les stimulations reproduisant chaque point d'un caractère Braille peuvent être simultanées, successives ou groupées par deux ou plus.

De manière avantageuse, un nombre important d'actionneurs est utilisé pour pouvoir générer au mieux des vibrations dans toutes les zones de la surface. Ainsi l'utilisateur peut disposer ses doigts librement sur la surface sans que cela ne détériore la lecture. De manière préférée, une méthode d'interpolation est mise en œuvre pour calculer les réponses dans les zones entre les actionneurs.

De préférence, une étape préalable de détection de l'emplacement des doigts sur la surface est mise en œuvre pour repérer ou se trouvent l'index, le majeur et l'annulaire de chaque main.

De manière très avantageuse, le dispositif haptique est également adapté pour permettre la saisie de texte. Pour cela le dispositif comporte des moyens de détection de l'effort exercé par chacun des doigts. Très avantageusement, les moyens de détection de l'effort peuvent mesurer l'intensité de la force, ainsi l'utilisateur peut laisser en permanence ses doigts sur la surface et moduler la pression de ses doigts sur celle-ci pour saisir un texte. Dans un exemple préféré, ce sont les actionneurs qui forment les moyens de détection de l'effort.

La présente invention peut être intégrée à des dispositifs portables tels que les téléphones portables type smartphone ou tablette tactile mais également à des dispositifs de la domotique, par exemple les tables de cuisson et autres appareils électroménagers.

L'objet de la présente demande est un dispositif haptique de lecture par la méthode Braille-Perkins comportant une plaque munie d'une surface avec laquelle au moins l'index, le majeur et l'annulaire de chaque main de l'utilisateur sont destinés à venir en contact, des actionneurs fixés à la plaque à l'opposé de ladite surface, lesdits actionneurs étant aptes à générer une vibration au niveau de la surface en des zones distinctes, une unité de commande desdits actionneurs, comprenant des moyens de calcul des signaux de commande mettant en œuvre une opération de filtrage inverse, et configurée pour envoyer des signaux de commande aux actionneurs, l'unité de commande étant configurée pour mettre en vibration n zones de la surface, n étant un entier compris entre 1 et 6, pour stimuler l'index, le majeur et l'annulaire de chaque main de l'utilisateur et reproduire par stimulation haptique les caractères Braille par la méthode Braille-Perkins, chaque zone correspondant à un point d'un caractère Braille.

Dans un exemple de réalisation, l'unité de commande est configurée pour mettre en vibration simultanément les n zones.

Dans un autre exemple de réalisation, l'unité de commande est configurée pour mettre en vibration successivement les n zones.

Le dispositif comporte avantageusement des moyens de détection de la présence de l'index, le majeur et l'annulaire de chaque main de l'utilisateur et dans lequel l'unité de commande est configurée pour repérer la position de l'index, le majeur et l'annulaire de chaque main de l'utilisateur sur la surface et enregistrer lesdites positions.

Par exemple, les moyens de détection comportent des moyens pour mesurer la pression exercée par chaque doigt sur la surface.

Le dispositif haptique de lecture peut comporter des moyens pour commander l'affichage des caractères sur la surface.

Un autre objet de la présente demande est un dispositif haptique d'affichage et de saisie de caractère Braille par la méthode Braille-Perkins comportant un dispositif haptique de lecture selon l'invention, dans lequel l'unité de commande est également configurée pour traduire une mesure de la pression exercé pour chaque doigt en un point d'un caractère Braille et pour identifier le caractère Braille.

Un autre objet de la présente demande est un procédé de fonctionnement d'un dispositif haptique de lecture d'un contenu numérique donnée par un utilisateur selon l'invention, comportant :

> a) la mise en place de au moins l'index, le majeur et l'annulaire de chaque main de l'utilisateur sur la surface du dispositif,
> b) la traduction du contenu numérique en caractères Braille,
> c) pour chaque caractère Braille, la génération de signaux aux actionneurs pour qu'ils mettent en vibration n zones de la surface, lesdites zones étant couvertes par l'index, le majeur et l'annulaire de chaque main de l'utilisateur.

Le procédé de fonctionnement comporte avantageusement, entre l'étape a) et l'étape b), une étape de repérage de l'emplacement de l'index, du majeur et de l'annulaire de chaque main de l'utilisateur sur la surface et d'association de chacun de ces doigts audit emplacement.

Un autre objet de la présente demande est un procédé de fonctionnement d'un dispositif haptique d'affichage et de saisie de caractère Braille par la méthode Braille-Perkins selon l'invention, mettant en œuvre les étapes du procédé de fonctionnement selon l'invention, et comportant :

- la mesure de la pression exercée par l'index, le majeur et l'annulaire de chaque main,
- la comparaison à une valeur seuil,
- la traduction des mesures en un point d'un caractère Braille et identification du caractère Braille.

## BRÈVE DESCRIPTION DES DESSINS

La présente invention sera mieux comprise sur la base de la description qui va suivre et des dessins en annexe sur lesquels:

La figure 1 est une représentation schématique d'un exemple de dispositif haptique selon la présente invention.
La figure 2 est une représentation schématique d'une vue de côté du dispositif haptique de la figure 1.
La figure 3A est une transcription de la lettre d en Braille.
La figure 3B représenté le dispositif de la figure 1 lors de l'affichage haptique du d selon un premier mode de fonctionnement.
La figure 3C est une représentation graphique de l'amplitude des vibrations en fonction du temps au niveau des zones Z1 à Z6 pour afficher haptiquement le d dans le premier mode de fonctionnement.
La figure 4 est une représentation graphique de l'amplitude des vibrations en fonction du temps au niveau des zones Z1 à Z6 pour afficher haptiquement le d dans un deuxième mode de fonctionnement ; et
La figure 5 est une représentation graphique de l'amplitude des vibrations en fonction du temps au niveau des zones Z1 à Z6 pour afficher haptiquement le d dans un troisième mode de fonctionnement.

## EXPOSÉ DÉTAILLÉ DE MODES DE RÉALISATION PARTICULIERS

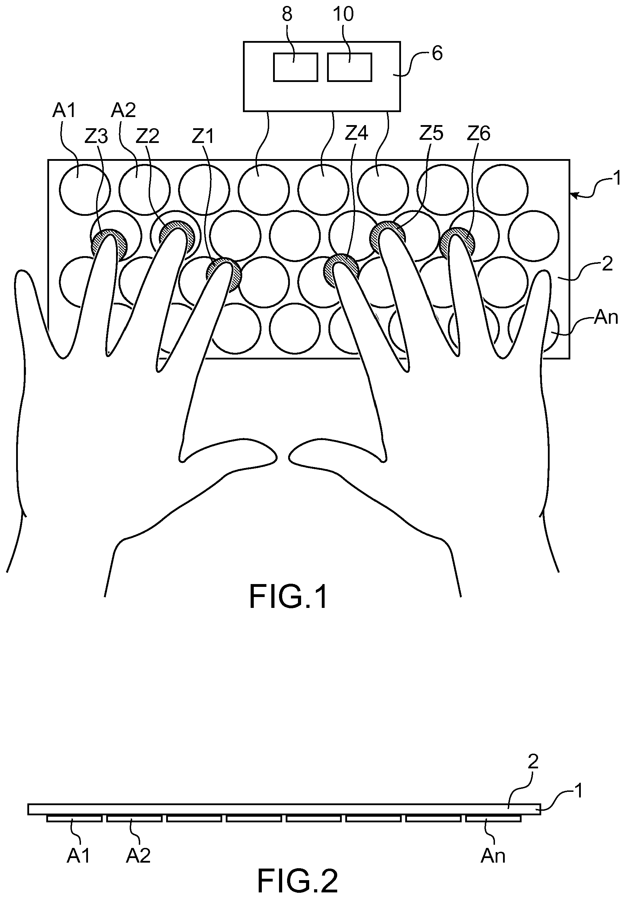

Sur la figure 1, on peut voir une représentation schématique d'une vue de dessus d'un dispositif haptique selon l'invention, comportant une plaque 1, portant sur une de ses faces la surface d'interaction avec l'extérieur, désignée surface tactile 2, une pluralité d'actionneurs A1, A2... An disposés sous la plaque 1, par exemple fixés sur la surface de la plaque 1 opposée à la surface tactile 2. Le dispositif haptique comporte également une unité de commande 6 de chacun des actionneurs comprenant des moyens de calcul 8 des signaux de commande.

Le matériau de la plaque est choisi de telle sorte qu'il permet à des vibrations basses fréquences, typiquement inférieures à 1000 Hz, de préférence entre 150 Hz et 1000 Hz qui est la bande de fréquence de sensibilité tactile, de se propager sur quelques centimètres (cm). Le matériau peut être un matériau souple ou rigide, par exemple en verre.

Les actionneurs sont tels qu'ils sont aptes, lorsqu'ils sont activés, à exercer un effort sur la plaque dans une direction hors-plan, i.e. orthogonale au plan de la plaque. Le plan de la plaque est le plan s'étendant parallèlement à sa plus grande surface. Sur la figure 2, on peut voir un exemple d'une vue de côté de l'interface de la figure 1. Les actionneurs sont aptes à exercer un effort vers le haut et/ou le bas dans la représentation de la figure 2.

Les actionneurs peuvent être en contact direct avec la plaque.

Les actionneurs sont par exemple des actionneurs piézoélectriques. Ce type d'actionneur est couramment mis en œuvre dans les interfaces tactiles. Un actionneur piézoélectrique comporte un matériau piézoélectrique sous forme de plaque, par exemple du PZT (Titano-Zirconate de Plomb) ou de l'AIN (Nitrure d'aluminium), et des électrodes de part et d'autre de la plaque et en contact avec celle-ci, pour lui appliquer un courant provoquant la déformation du matériau piézoélectrique.

Grâce à l'invention, il est également possible de donner un profil contrôlé à la surface. En effet, une déformation permanente de la surface peut être vue comme une vibration de fréquence nulle. On peut donc appliquer le procédé de filtre inverse. En exerçant un effort localisé sur une plaque, l'ensemble de la surface est déformé. En appliquant le procédé de filtre inverse, on peut annuler cette déformation aux points souhaités.

Des actionneurs électromagnétiques sont envisageables. Ils sont adaptés à un fonctionnement à basse fréquence. De tels actionneurs sont par exemple décrit dans le document Benali-Khoudja et al. - 2007 - VITAL An electromagnetic integrated tactile display ». Les actionneurs comportent par exemple chacun une bobine fixe et un aimant collé sous la surface tactile. Le signal de courant envoyé dans les bobines est calculé par filtrage inverse.

L'utilisateur est destiné à interagir avec la surface tactile 2, notamment en disposant l'index, le majeur et l'annulaire de chaque main sur la surface tactile et ressentir des vibrations au niveau d'un ou plusieurs de ces doigts.

Les doigts peuvent être disposés à l'aplomb ou non des actionneurs A1 à An.

Par exemple les actionneurs ont une forme de disque de diamètre Ø compris entre 20 mm et 35 mm. En variante ils peuvent avoir la forme d'un hexagone qui se rapproche de la forme de disque, assurant un pavage maximal sous la surface tactile.

Le dispositif met de préférence en œuvre un grand nombre d'actionneurs sous l'ensemble de la surface d'interaction, ce qui permet d'améliorer le contrôle en champ proche du dispositif. Les zones de stimulation potentielles sont situées dans le champ proche des actionneurs, i.e. les zones de stimulation potentielles sont situées à une distance inférieure ou égale à la dimension des actionneurs dans le plan ou à la longueur d'onde des signaux de contrôle envoyés aux actionneurs, la plus grande distance étant considérée.

Cette configuration en champ proche permet un contrôle efficace en réduisant la puissance des signaux émis pour obtenir des déplacements donnés, notamment lorsque les points de contrôle sont distants de moins d'une longueur d'onde les uns des autres.

Les actionneurs peuvent être fixés, par exemple par collage directement sur la face de la plaque 1 opposée à la surface tactile 2. Les actionneurs sont indépendants. En variante, Les actionneurs comportent en commun une couche de matériau piézoélectrique, une électrode commune entre la couche piézoélectrique et la plaque et des électrodes sur la face opposée de la couche piézoélectrique de sorte à réaliser des actionneurs individuels.

Les moyens de calcul 8 mettent en œuvre une opération de filtrage inverse pour déterminer les signaux de contrôle. Les moyens de calcul mettent en œuvre également un algorithme de synthèse des vibrations déterminant le signal souhaité en une zone, en fonction de la stimulation souhaitée dans cette zone, et prenant par exemple en compte la force d'appui sur cette zone. Ce type d'algorithme est bien connu de l'homme du métier et ne sera pas décrit en détail.

L'opération de filtrage inverse est par exemple décrite dans l'article «Optimal focusing by spatio-temporal inverse filter. I. Basic principles » M. Tanter et al., The Journal of the Acoustical Society ofAmerica 110, 37 (2001) appliquée au traitement d'image en imagerie médicale. Un exemple de mise en œuvre de l'opération de filtrage inverse pour déterminer les signaux de contrôle d'actionneurs d'un dispositif surfacique est décrit dans le document WO2021922762 et dans l'article Lucie Pantera and Charles Hudin, « Multitouch Vobrotactile Feedback on a Tactile Screen by the Inverse Filter Tehnique : Vibration Amplitude ans Spatial Resolution » in Transactions on Haptics - Special issue on surface haptics, pp 1-11 2020.

La réponse R d'un système linéaire à une excitation E est donnée par la relation $R=H.E$, avec H la fonction de transfert du système. Dans l'application à une interface tactile, on observe le déplacement $U_i$ de la plaque mesuré en un point $i$, par exemple au centre d'un actionneur, en réponse à un signal $S_j$ envoyé à un actionneur $j$. On a donc :

$$U_i(\omega) = H_{ij}(\omega)S_j(\omega)$$

Avec $H_{ij}(\omega)$ la fonction de transfert entre le signal envoyé à l'actionneur $j$ et le déplacement enregistré au point $i$. Si N actionneurs émettent simultanément, le déplacement obtenu est la somme des contributions de ces N actionneurs, soit :

$$U_i(\omega) = \sum_{j=1}^{N} H_{ij}(\omega)S_j(\omega)$$

Sous forme matricielle dans le cas de M points de contrôle $i$ on écrit :

$$\begin{bmatrix} U_1 \\ U_2 \\ \vdots \\ U_M \end{bmatrix}_{\omega} = \begin{bmatrix} H_{11} & H_{12} & \cdots & H_{1N} \\ H_{21} & H_{22} & & H_{2N} \\ & \vdots & \ddots & \vdots \\ H_{M1} & H_{M2} & \cdots & H_{MN} \end{bmatrix}_{\omega} \cdot \begin{bmatrix} S_1 \\ S_2 \\ \vdots \\ S_N \end{bmatrix}_{\omega}$$

Ou

$$\mathbb{U}_{\omega} = \mathbb{H}_{\omega}.\mathbb{S}_{\omega}$$

Le déplacement $u_i$ au point de contrôle $i$ dépend donc de l'ensemble des signaux envoyés à l'ensemble des actionneurs. Tous les actionneurs participent donc au déplacement en chaque point de contrôle i. Le déplacement $u_i$ n'est donc pas proportionnel au signal $s_i$ qui lui est appliqué, mais dépend, via les termes $H_{ij}$, des signaux envoyés aux autres actionneurs qui produisent des ondes se propageant dans toute la plaque.

Le filtrage inverse consiste à inverser cette relation en calculant le signal à appliquer à l'ensemble des

$$\mathbb{V}_{\omega} = \begin{bmatrix} V_1 \\ V_2 \\ \vdots \\ V_M \end{bmatrix}_{\omega}$$

actionneurs pour obtenir le déplacement souhaité. En notant            le déplacement souhaité, dans le domaine

$$\mathbb{S}_{\omega} = \begin{bmatrix} S_1 \\ S_2 \\ \vdots \\ S_N \end{bmatrix}_{\omega}$$

fréquentiel, à l'ensemble des positions, on calcule le signal $\quad$ à envoyer à chacun des actionneurs par la relation :

$$\mathbb{S}_{\omega} = \mathbb{H}_{\omega}^{-1}.\mathbb{V}_{\omega}$$

On obtient finalement un déplacement $\mathbb{U}_{\omega}$ donné par :

$$\mathbb{U}_{\omega} = \mathbb{H}_{\omega}.\mathbb{S}_{\omega} = \mathbb{H}_{\omega}.\mathbb{H}_{\omega}^{-1}.\mathbb{V}_{\omega} = \mathbb{V}_{\omega}$$

On obtient ainsi un déplacement conforme à celui attendu : $\mathbb{U}_{\omega} = \mathbb{V}_{\omega}.$ .

En inversant la matrice, on compense l'ensemble des effets, avant génération des signaux de contrôle pour obtenir le déplacement souhaité malgré les distorsions, les réverbérations et les propagations des ondes. La détermination de la matrice s'effectue lors d'une phase de calibration lors de laquelle on mesure les vibrations dans les zones au-dessus de chacun des actionneurs provoquées par l'actionnement des actionneurs, ainsi que la propagation, la réverbération et l'atténuation des ondes dans ces zones.

Ce filtre est temporel dans la mesure où il opère une transformation sur l'amplitude et la phase à toutes les fréquences, et spatial puisqu'il prend en compte les signaux émis par l'ensemble des actionneurs.

Grâce à l'opération de filtrage inverse, des signaux de contrôle sont envoyés à tous les actionneurs et sont tels que, pour les zones pour lesquelles on ne souhaite aucune stimulation, les actionneurs génèrent des vibrations visant à annuler celles résultant par propagation de l'activation de l'actionneur sous la ou les zone(s) où l'on souhaite générer une stimulation.

Le calcul du signal de commande de l'actionneur sous la zone où l'on souhaite générer une stimulation prend en compte à la fois le déplacement souhaité et l'effet de la propagation et de la réflexion des vibrations produites par les autres actionneurs. Selon l'invention, chaque actionneur est donc contrôlé en tenant compte de l'environnement extérieur.

On peut alors obtenir, en chaque zone de la surface, un déplacement qui peut être nul, corrigé d'effets de distorsions et réverbérations, et indépendant des déplacements au centre des autres zones.

Selon un mode de fonctionnement de l'invention, les moyens de calcul sont configurés pour générer simultanément en au plus six emplacements des vibrations destinées à stimuler l'index, le majeur et l'annulaire de chaque main, ces emplacements pouvant ne pas être définis avant la mise en place des doigts sur la surface tactile.

L'application de la méthode de filtrage inverse pour générer des signaux de contrôle aux actionneurs permet de localiser très précisément les vibrations générées et ainsi d'éviter par exemple de stimuler à la fois le majeur et l'annulaire de la main gauche alors que seul le majeur devait être excité. Tous les actionneurs reçoivent un signal d'activation pour compenser au moins partiellement la distorsion, la réverbération et la propagation des ondes en dehors des zones couvertes par l'index, le majeur et l'annulaire des deux mains.

En outre de manière avantageuse, afin de pouvoir générer des vibrations en tout point de la surface et donc rendre encore plus libre le placement des doigts sur la surface tactile, une étape d'interpolation est réalisée permettant de calculer théoriquement la réponse impulsionnelle en chaque point de la surface. Comme indiqué plus haut une étape de calibration de la surface est réalisée où les réponses impulsionnelles de la surface sont enregistrées dans une matrice $\hat{h}_{cq}(t)$ où c = 1...C, avec C le nombre de points de calibration choisi pour la calibration et q le nombre d'actionneurs. A partir de cette matrice $\hat{h}_{cq}(t)$ et des coordonnés en abscisse $x_f$ et en ordonnée $y_f$ du doigt/des doigts sur l'écran on peut calculer la matrice $h_{fq}(t)$ correspondant précisément à l'emplacement du ou des doigt(s) ce qui permet d'avoir des calculs beaucoup plus rapides et précis. Pour obtenir la matrice $h_{fq}(t)$ , une interpolation de Fourier comme ci-dessous est réalisée :

$$h_{fq}(t) = \sum_{c=1}^{C} \hat{h}_{cq}(t).sinc\left(\frac{\pi\left(x_f - x_c\right)}{dx}\right).sinc\left(\frac{\pi\left(y_f - y_c\right)}{dy}\right)$$

Où :

$sinc(x) = \sin(x)/x$ : La fonction sinus cardinal,

$x_f$ : Les coordonnées du doigt/des doigts sur l'axe x,

$y_f$ : Les coordonnées du doigt/des doigts sur l'axe y,

$x_c$ : Les coordonnées des points de calibration sur l'axe x,

$y_c$ : Les coordonnées des points de calibration sur l'axe y,

$\hat{h}_{cq}$ : La réponse impulsionnelle mesurée aux points de calibrations.

Le dispositif haptique comporte également des moyens 10 pour détecter la présence des doigts sur la surface tactile. Par exemple il peut s'agir de moyens capacitifs, résistifs ou infrarouges, ces moyens sont bien connus de l'homme du métier et ne seront pas décrits en détail dans la présente de demande. Le dispositif comporte par exemple un écran capacitif. Une variation locale de la capacité correspond à une pression exercée par un doigt et donc à la présence d'un doigt.

De manière avantageuse, l'unité de commande 6 est configurée pour lancer au début de l'utilisation du dispositif haptique une étape de repérage des doigts sur la surface tactile 2, plus particulièrement le repérage de l'emplacement de l'index, du majeur et de l'annulaire de chaque main et leur associer les zones Z1 à Z6 de la surface tactile 2. Ainsi les positions des six doigts seront connues et les vibrations pour reproduire les lettres selon méthode Braille-Perkins pourront être générées dans les zones détectées et associées à l'index, le majeur et l'annulaire de chaque main. La mise en œuvre de tels moyens de repérage permet à l'utilisateur de pouvoir tenir le dispositif haptique sans que lui soit imposée une orientation du dispositif.

L'interface permet de travailler à toutes fréquences et pas uniquement aux fréquences de sensibilité tactile comprises entre 150 Hz et 1000 Hz, cependant celles-ci sont avantageuses car elles ne produisent pas de son lors de l'activation des actionneurs. Ainsi différents types d'actionneurs peuvent être utilisés. Les actionneurs piézoélectriques sont adaptés à des fonctionnements haute et basse fréquence.

Un exemple de « prise en main » du dispositif haptique va maintenant être décrit. Le dispositif haptique est par exemple intégré à un téléphone portable, type smartphone. L'utilisateur règle son smartphone en mode « Saisie Braille », il le positionne ensuite à l'horizontale et commence une phase de calibration. Par exemple, il commence par faire une tape rapide et simultanée avec l'index, le majeur et l'annulaire de la main gauche puis de la main droite. Les six doigts sont alors calibrés sur l'écran. L'unité de commande « sait » où se situent l'index, le majeur et l'annulaire de chaque main sur l'écran et peut alors envoyer les signaux à ces emplacements pour « afficher » tactilement les lettres.

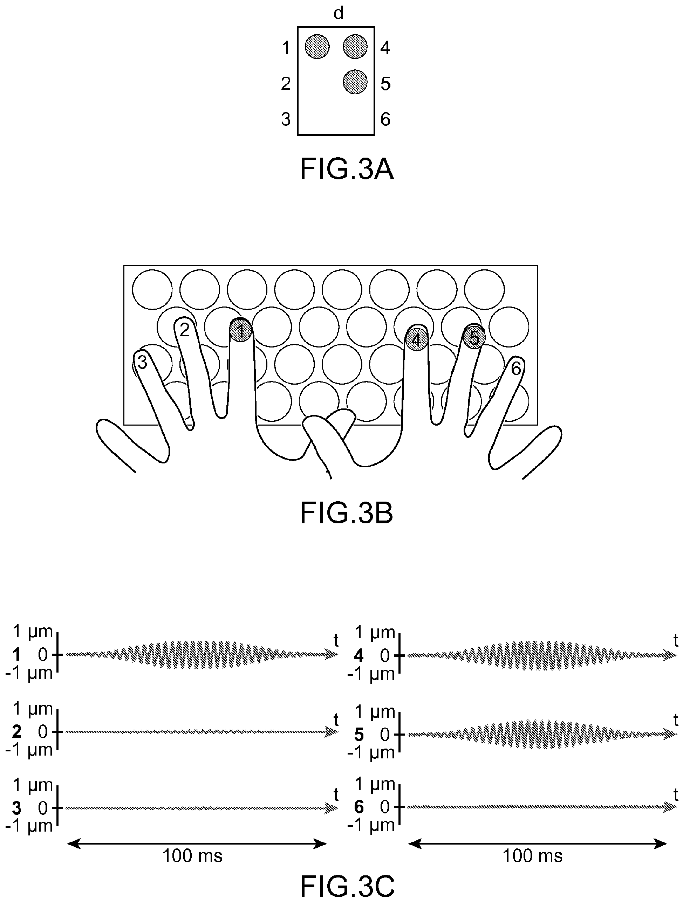

Un exemple de fonctionnement de ce dispositif va maintenant être décrit en relation avec les figures 3A à 3C.

On souhaite afficher tactilement le d sur la surface tactile 2.

Sur la figure 3A, on peut voir la transcription du d en Braille. Pour cela l'index de la main gauche (point 1), l'index de la main droite (point 4) et le majeur de la main droite (point 5) doivent être stimulés.

Sur la figure 3B, on peut voir l'index, le majeur et l'annulaire de chaque main de l'utilisateur sur la surface tactile 2.

L'unité de commande 6 détecte la présence des doigts et lance une étape de repérage des doigts afin d'associer à chaque zone Z1, Z2, Z3, Z4, Z5, Z6 couverte par chaque doigt un doigt et donc un emplacement dans la matrice trois lignes deux colonnes d'un caractère Braille.

Par exemple, à la fin de l'étape de repérage, l'unité de commande 6 a associé la zone Z1 à l'index de la main gauche, la zone Z2 au majeur de la main gauche, la zone Z3 à l'annulaire de la main gauche, la zone Z4 à l'index de la main droite, la zone Z5 au majeur de la main droite et la zone Z6 à l'annulaire de la main droite.

Il peut être prévu de répéter cette étape de repérage si le dispositif détecte que l'utilisateur a retiré tout ou partie de ses doigts de la surface pendant un intervalle de temps et donc que l'emplacement de tout ou partie des doigts sur la surface a changé.

L'unité de commande joue ensuite le d. Les moyens de commande vont calculer pour chaque doigt les signaux à envoyer à chaque actionneur pour générer dans les zones Z1, Z4 et Z5 une stimulation tactile. Pour le d, l'index de la main gauche, l'index de la main droite et le majeur de la main droite sont stimulés.

Sur la figure 3C, on peut voir graphiquement l'amplitude des vibrations en fonction du temps au niveau des zones Z1, Z4 et Z5. Grâce à la mise en œuvre de la méthode de filtrage inverse, les vibrations sont localisées et les zones Z2, Z3 et Z6 sont immobiles. Dans cet exemple l'amplitude des vibrations et la durée d'une stimulation sont suffisantes pour être ressenties par l'utilisateur. L'amplitude de vibration peut atteindre par exemple 4 µm. Dans l'exemple représenté, l'amplitude des vibrations est de l'ordre d'1 µm. La durée de la stimulation est suffisamment longue pour qu'elle soit perçue par un usager, elle est par exemple comprise entre 200 ms et 500 ms.

Grâce à l'application de la méthode de filtrage inverse, seuls les doigts à stimuler ressentent effectivement une stimulation et les doigts ne sont pas stimulés par erreur puisque les propagations et des réverbérations des ondes sont évitées ou au moins fortement limitées.

De manière très avantageuse, le dispositif haptique comporte des moyens pour permettre à l'utilisateur d'agir sur l'affichage des lettres. Par exemple, des moyens sont prévus pour permettre un retour en arrière de l'affichage des caractères, par exemple pour relire un mot ou une phrase ou pour ralentir l'affichage des caractères. Par exemple, ces moyens permettant d'agir sur le défilement des caractères comportent une molette qui peut être manipulée par un des pouces, en effet les pouces ne sont pas utilisés dans la lecture Braille. La molette peut être une molette mécanique. En variante il peut s'agit d'un curseur tactile.

Selon cet autre exemple de fonctionnement du dispositif haptique, « l'affichage » haptique d'un caractère, plus particulièrement de ses points, est séquentiel, i.e. le retour haptique des points 1, 4 et 5 du caractère Braille sont joués décalés dans le temps dans l'ordre croissant, i.e. le point 1 avant le point 4 lui-même avant le point 5.

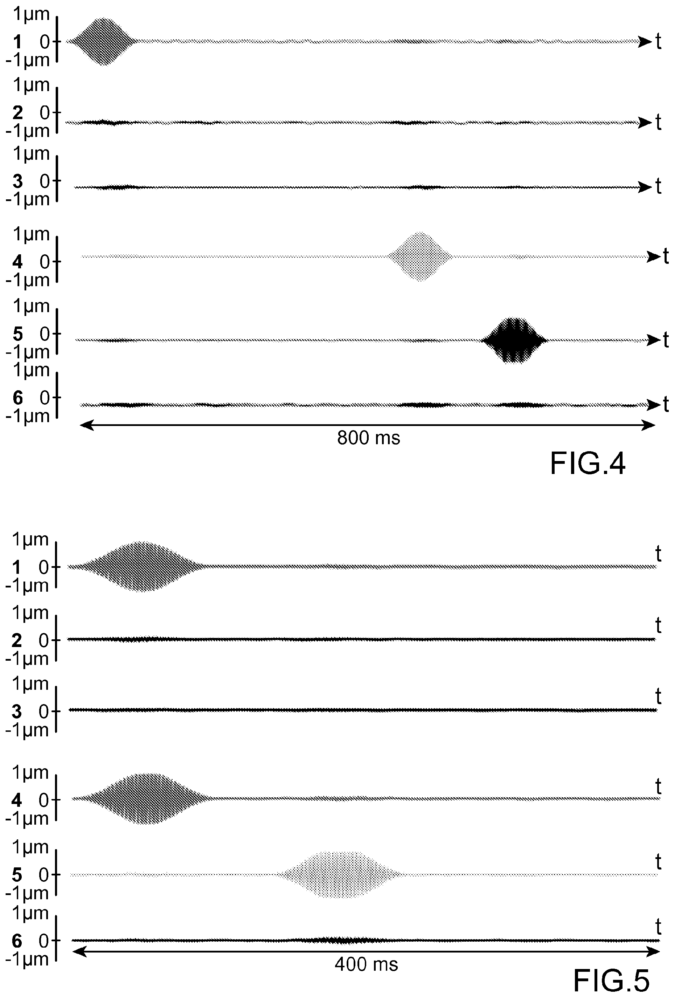

Sur la figure 4, on peut voir la représentation graphique de l'amplitude des vibrations en fonction du temps au niveau des zones Z1, Z4 et Z5. Les vibrations apparaissent à des instants différents dans les différentes zones, la mise en vibration de la zone Z1 ayant lieu avant celle de la zone Z4 qui a lieu avant celle de la zone Z5. La mise en vibration d'une zone est terminée lorsque la mise en vibration de la zone suivante survient. Un temps suffisant entre les stimulations de deux doigts successives est prévu pour permettre à l'utilisateur de décoder l'information. Dans l'exemple représenté, le temps de stimulation est de l'ordre de 200 ms et l'intervalle de temps entre deux points activés est de 200 ms. Ces temps sont indicatifs et l'usager sera libre de les changer à tout moment.

Dans l'exemple représenté, l'amplitude des vibrations est de l'ordre de 1 $\mu$m et la durée de la stimulation est de l'ordre de 200 ms.

La durée des impulsions et/ou le temps entre deux impulsions et/ou l'amplitude des stimulations peuvent avantageusement être réglés par l'usager en fonction de ses habitudes et besoins, par exemple lors de la première utilisation du dispositif.

Selon un autre exemple de fonctionnement du dispositif haptique, les points d'un caractère sont joués deux par deux. Par exemple, tout d'abord sont joués les points 1 et 4, puis les points 2 et 5 et enfin les points 3 et 6. Il sera compris que l'un ou l'autre ou aucun des points de chaque paire est ou sont traduit(s) par une vibration.

Dans le cas du d, comme cela est représenté sur la figure 5, les zones Z1 et Z4 sont excitées simultanément, puis uniquement la zone Z5 et enfin ni la zone Z3, ni la zone Z6 ne sont excitées.

Dans l'exemple représenté, l'amplitude des vibrations est de l'ordre de 1 $\mu$m et la durée de la stimulation est de l'ordre de 200 ms.

Dans les exemples de lecture décrits ci-dessus, toutes les zones sont excitées avec la même amplitude, pendant une même durée et avec la même fréquence. En variante, les zones sont excitées avec des amplitudes différentes et/ou pendant des durées différentes et/ou avec des fréquences différentes. Il peut être envisagé d'exciter des doigts avec des fréquences différentes pour aider la reconnaissance des lettres.

De manière très avantageuse, le dispositif haptique permet également une saisie de caractère par l'utilisateur, le dispositif fonctionnant alors en lecture et en écriture.

Pour cela, le dispositif comporte des moyens pour mesurer une pression 10 exercée par chacun des six doigts sur la surface tactile, l'unité de commande 6 ayant repéré l'emplacement de chacun des doigts peut déduire de la mesure des pressions dans les six zones le caractère à « écrire ». Par exemple, les moyens 10 pour détecter la présence des doigts sur la surface tactile sont en outre configurés pour mesurer la pression exercée par un doigt, voire comportent les moyens pour mesurer la pression exercée par chaque doigt sur la surface. De préférence, l'unité de commande 6 compare la valeur de pression exercé par chacun des doigts à une valeur seuil en dessous de laquelle on considère qu'il ne s'agit pas d'une pression exercé pour générer un caractère Braille. Ainsi l'utilisateur peut laisser en permanence ses doigts en contact avec la surface sans risquer que ce contact soit considéré comme un appui pour générer un point d'un caractère Braille.

Selon un exemple, la mesure de la pression peut être réalisée au moyen de capteurs de force, type jauge de contrainte, disposés en périphérie de la surface. L'effort total appliqué sur la surface est alors mesuré, comme cela est décrit dans le document US005241308 qui décrit un panneau tactile comportant des jauges de contrainte à ses quatre coins, ce qui permet de détecter la force d'appui en quatre coins et de retrouver la position touchée et la force correspondante Selon un autre exemple, la déformation locale de la surface tactile est mesurée au moyen d'une grille d'électrodes située sous la plaque à l'opposé de la surface via une mesure capacitive. Une telle grille d'électrodes est décrite dans les documents US9349552 et US5510813 pour la détection de la position et la détection de la force par une mesure capacitive. En variante encore, on peut mettre en œuvre un ensemble de capteurs de force répartis sous la surface pour une détection multicontact de position et de force, comme cela est décrit dans le document. US 2010/0053116 A1.

L'ordre de grandeur de la pression maximale exercée par l'utilisateur en écriture Braille est de l'ordre de 1 N.

Pour pallier les problèmes de dérives de mains ainsi que pour les frappes non volontaires des algorithmes ont été développés, de tels logiciels sont décrits par exemple dans Shiri, WOBBROCK, Jacob O., PRASAIN, Sanjana, et al. Input finger detection for nonvisual touch screen text entry in Perkinput. In : Proceedings of graphies interface 2012. 2012. p. 121-129.

Le passage du mode lecture au mode écriture et inversement peut être commandé par une manipulation spécifique sur l'écran. Par exemple, l'utilisateur dessine un demi-cercle sur l'écran avec deux doigts, faisant apparaître un menu sous forme de roulette. L'utilisateur répète le mouvement jusqu'à ce que l'entrée « Saisie Braille » ou « Lecture Braille », soit lu par une synthèse vocale et sélectionne la saisie Braille ou la lecture Braille.

La saisie peut avoir plusieurs modes de fonctionnement comme pour la lecture. L'utilisateur peut exercer des appuis pour tous les points d'un caractère simultanément, successivement ou par groupe.

Les zones ne sont plus alors des zones d'émission d'une vibration mais des zones de captation des signaux émis par un ou plusieurs doigts.

La présente invention peut alors être facilement intégrée à des dispositifs portables tels que les téléphones portables type smartphone ou tablette tactile mais également à des dispositifs de la domotique, par exemple les tables de cuisson et autres appareils électroménagers.

## Revendications

1. Dispositif haptique de lecture par la méthode Braille-Perkins comportant une plaque (1) munie d'une surface (2) avec laquelle au moins l'index, le majeur et l'annulaire de chaque main de l'utilisateur sont destinés à venir en contact, des actionneurs (A1, A2, An) fixés à la plaque (1) à l'opposé de ladite surface (2), lesdits actionneurs (A1, A2, An) étant aptes à générer une vibration au niveau de la surface en des zones distinctes, une unité de commande (6) desdits actionneurs (A1, A2, An), comprenant des moyens de calcul des signaux de commande mettant en œuvre une opération de filtrage inverse, et configurée pour envoyer des signaux de commande à tous les actionneurs (A1, A2, An), l'unité de commande (6) étant configurée pour mettre en vibration n zones de la surface (2), n étant un entier compris entre 1 et 6, pour stimuler l'index, le majeur et l'annulaire de chaque main de l'utilisateur et reproduire par stimulation haptique les caractères Braille par la méthode Braille-Perkins, chaque zone correspondant à un point d'un caractère Braille.

2. Dispositif haptique de lecture selon la revendication 1, dans lequel l'unité de commande est configurée pour mettre en vibration simultanément les n zones.

3. Dispositif haptique de lecture selon la revendication 1, dans lequel l'unité de commande est configurée pour mettre en vibration successivement les n zones.

4. Dispositif haptique de lecture selon la revendication 1, 2 ou 3, comportant des moyens de détection (10) de la présence de l'index, le majeur et l'annulaire de chaque main de l'utilisateur et dans lequel l'unité de commande (6) est configurée pour repérer la position de l'index, le majeur et l'annulaire de chaque main de l'utilisateur sur la surface et enregistrer lesdites positions.

5. Dispositif haptique de lecture selon la revendication précédente, dans lequel les moyens de détection (10) comportent des moyens pour mesurer la pression exercée par chaque doigt sur la surface.

6. Dispositif haptique de lecture selon l'une des revendications précédentes, comportant des moyens pour commander l'affichage des caractères sur la surface.

7. Dispositif haptique d'affichage et de saisie de caractère Braille par la méthode Braille-Perkins comportant un dispositif haptique de lecture selon l'une des revendications 1 à 6, dans lequel l'unité de commande (6) est également configurée pour traduire une mesure de la pression exercée pour chaque doigt en un point d'un caractère Braille et pour identifier le caractère Braille.

8. Procédé de fonctionnement d'un dispositif haptique de lecture d'un contenu numérique donnée par un utilisateur selon l'une des revendications 1 à 6, comportant :

   a) la mise en place de au moins l'index, le majeur et l'annulaire de chaque main de l'utilisateur sur la surface du dispositif,
   b) traduction du contenu numérique en caractères Braille,
   c) Génération pour chaque caractère Braille de signaux à tous les actionneurs pour qu'ils mettent en vibration n zones de la surface, lesdites zones étant couvertes par l'index, le majeur et l'annulaire de chaque main de l'utilisateur.

9. Procédé de fonctionnement selon la revendication précédente, comportant entre l'étape a) et l'étape b), une étape de repérage de l'emplacement de l'index, du majeur et de l'annulaire de chaque main de l'utilisateur sur la surface et d'association de chacun de ces doigts audit emplacement.

10. Procédé de fonctionnement d'un dispositif haptique d'affichage et de saisie de caractère Braille par la méthode Braille-Perkins selon la revendication 7, mettant en œuvre les étapes du procédé de fonctionnement selon la revendication 8 ou 9, et comportant :

- la mesure de la pression exercée par l'index, le majeur et l'annulaire de chaque main,
- la comparaison à une valeur seuil,
- la traduction des mesures en en un point d'un caractère Braille et identification du caractère Braille.

**Patentansprüche**

1. Haptische Lesevorrichtung nach der Braille-Perkins-Methode, die eine Platte (1) mit einer Oberfläche (2) umfasst, mit der mindestens Zeige-, Mittel- und Ringfinger jeder Hand des Benutzers in Kontakt kommen sollen, Stellglieder (A1, A2, An), die gegenüber der Oberfläche (2) an der Platte (1) befestigt sind, wobei die Stellglieder (A1, A2, An) geeignet sind, in getrennten Bereichen eine Schwingung auf der Oberfläche zu erzeugen, eine Steuereinheit (6) der Stellglieder (A1, A2, An), umfassend Mittel zur Berechnung von Steuersignalen, die einen umgekehrten Filtervorgang durchführen, und eingerichtet sind, um Steuersignale an alle Stellglieder (A1, A2, An) zu senden, wobei die Steuereinheit (6) so eingerichtet ist, dass sie n Bereiche der Oberfläche (2) in Schwingung versetzt, wobei n eine Ganzzahl zwischen 1 und 6 ist, um den Zeige-, Mittel- und Ringfinger jeder Hand des Benutzers zu stimulieren und durch haptische Stimulation die Braille-Zeichen nach dem Braille-Perkins-Verfahren wiederzugeben, jeder Bereich, der einem Punkt eines Braille-Zeichens entspricht.

2. Haptische Lesevorrichtung nach Anspruch 1, wobei die Steuereinheit so eingerichtet ist, dass sie die n Bereiche gleichzeitig in Schwingung versetzt.

3. Haptische Lesevorrichtung nach Anspruch 1, wobei die Steuereinheit so eingerichtet ist, dass sie die n Bereiche nacheinander in Schwingung versetzt.

4. Haptische Lesevorrichtung nach Anspruch 1, 2 oder 3, umfassend Erfassungsmittel (10) des Vorhandenseins des Zeige-, Mittel- und Ringfingers jeder Hand des Benutzers und wobei die Steuereinheit (6) so eingerichtet ist, dass sie die Position des Zeige-, Mittel- und Ringfingers jeder Hand des Benutzers auf der Oberfläche erkennt und die Positionen speichert.

5. Haptische Lesevorrichtung nach dem vorhergehenden Anspruch, wobei die Erfassungsmittel (10) Mittel zum Messen des von jedem Finger auf die Oberfläche ausgeübten Drucks umfassen.

6. Haptische Lesevorrichtung nach einem der vorhergehenden Ansprüche, umfassend Mittel zur Steuerung der Anzeige der Zeichen auf der Oberfläche.

7. Haptische Vorrichtung zur Anzeige und Eingabe von Braille-Zeichen nach dem Braille-Perkins-Verfahren, die eine haptische Lesevorrichtung nach einem der Ansprüche 1 bis 6 umfasst, wobei die Steuereinheit (6) auch so eingerichtet ist, dass sie eine Messung des für jeden Finger ausgeübten Drucks in einen Punkt eines Braille-Zeichens übersetzt und das Braille-Zeichen identifiziert.

8. Bedienverfahren für eine haptische Vorrichtung zum Lesen eines von einem Benutzer gegebenen digitalen Inhalts nach einem der Ansprüche 1 bis 6, umfassend:

a) Platzierung von mindestens Zeige-, Mittel- und Ringfinger jeder Hand des Benutzers auf der Oberfläche des Geräts,
b) Übersetzung des digitalen Inhalts in Braille-Zeichen,
c) Erzeugung, für jedes Braille-Zeichen, von Signalen an alle Stellglieder, damit sie n Bereiche der Oberfläche in Schwingung versetzen, wobei diese Bereiche vom Zeige-, Mittel- und Ringfinger jeder Hand des Benutzers abgedeckt werden.

9. Bedienverfahren nach dem vorhergehenden Anspruch, umfassend zwischen Schritt a) und Schritt b), einen Schritt des Markierens der Position des Zeige-, Mittel- und Ringfingers jeder Hand des Benutzers auf der Oberfläche und des Assoziierens jedes dieser Finger mit dieser Position.

10. Bedienverfahren einer haptischen Vorrichtung zur Anzeige und Eingabe von Braille-Zeichen nach dem Braille-Perkins-Verfahren nach Anspruch 7, wobei die Schritte des Bedienverfahrens nach Anspruch 8 oder 9 durchgeführt werden, und umfassend:

    - die Messung des Drucks, der von Zeige-, Mittel- und Ringfinger jeder Hand ausgeübt wird,
    - den Vergleich mit einem Schwellenwert,
    - die Übersetzung der Messungen in einen Punkt eines Braille-Zeichens und Identifizierung des Braille-Zeichens.

**Claims**

1. A haptic device for reading using the Braille-Perkins method including a plate (1) provided with a surface (2) with which at least the index finger, the middle finger and the ring finger of each hand of the user are intended to come into contact, actuators (A1, A2, An) fastened to the plate (1) opposite said surface (2), said actuators (A1, A2, An) being capable of generating a vibration at the surface in distinct areas, a control unit (6) for controlling said actuators (A1, A2, An), comprising means for computing the control signals implementing an inverse filtering operation, and configured to send control signals to all the actuators (A1, A2, An), the control unit (6) being configured to make n areas of the surface (2) vibrate, n being an integer comprised between 1 and 6, to stimulate the index finger, the middle finger and the ring finger of each hand of the user and reproduce by haptic stimulation the Braille characters using the Braille-Perkins method, each area corresponding to a dot of a Braille character.

2. The haptic reading device according to claim 1, wherein the control unit is configured to make the n areas vibrate simultaneously.

3. The haptic reading device according to claim 1, wherein the control unit is configured to make the n areas vibrate successively.

4. The haptic reading device according to claim 1, 2 or 3, including means (10) for detecting the presence of the index finger, the middle finger and the ring finger of each hand of the user and wherein the control unit (6) is configured to locate the position of the index finger, the middle finger and the ring finger of each hand of the user on the surface and record said positions.

5. The haptic reading device according to the preceding claim, wherein the detection means (10) include means for measuring the pressure exerted by each finger on the surface.

6. The haptic reading device according to one of the preceding claims, including means for controlling the display of the characters on the surface.

7. A haptic device for displaying and entering Braille characters using the Braille-Perkins method including a haptic reading device according to one of claims 1 to 6, wherein the control unit (6) is also configured to translate a measurement of the pressure exerted for each finger into a dot of a Braille character and to identify the Braille character.

8. A method for operating a haptic device for reading digital content given by a user according to one of claims 1 to 6, including:

    a) placing at least the index finger, the middle finger and the ring finger of each hand of the user on the surface of the device,
    b) translating the digital content into Braille characters,
    c) generating for each Braille character signals to all the actuators so they make n areas of the surface vibrate, said areas being covered by the index finger, the middle finger and the ring finger of each hand of the user.

9. The operating method according to the preceding claim, including between step a) and step b), a step of locating the location of the index finger, the middle finger and the ring finger of each hand of the user on the surface and of associating each of these fingers with said location.

10. A method for operating a haptic device for displaying and entering Braille characters using the Braille-Perkins method according to claim 7, implementing the steps of the operating method according to claim 8 or 9, and including:

- measuring the pressure exerted by the index finger, the middle finger and the ring finger of each hand,
- comparing with a threshold value,
- translating the measurements into a dot of a Braille character and identifying the Braille character.

FIG.1

FIG.2

FIG.3A

FIG.3B

FIG.3C

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3705983 A1
- WO 2021922762 A
- US 005241308 A
- US 9349552 B
- US 5510813 A
- US 20100053116 A1

**Littérature non-brevet citée dans la description**

- **NICOLAU, H. M.** Holibraille: Multipoint vibrotactile feedback on mobile devices. *Proceedings of the 12th Web for All Conference*, 01 May 2015, 18-20
- **RANTALA, J. R.** Methods for presenting braille characters on a mobile device with a touchscreen and tactile feedback. *IEEE Transactions on Haptics*, 15 January 2009, 28-39
- **BENALI-KHOUDJA et al.** *VITAL An electromagnetic integrated tactile display*, 2007
- **M. TANTER et al.** Optimal focusing by spatio-temporal inverse filter. I. Basic principles. *The Journal of the Acoustical Society ofAmerica*, 2001, vol. 110, 37
- **LUCIE PANTERA** ; **CHARLES HUDIN**. Multitouch Vobrotactile Feedback on a Tactile Screen by the Inverse Filter Tehnique : Vibration Amplitude ans Spatial Resolution. *Transactions on Haptics - Special issue on surface haptics*, 2020, 1-11
- **SHIRI, WOBBROCK** ; **JACOB O.** ; **PRASAIN, SANJANA et al.** Input finger detection for nonvisual touch screen text entry in Perkinput. *Proceedings of graphies interface*, 2012, vol. 2012, 121-129